(19)

Europäisches
Patentamt
European
Patent Office
Office européen
des brevets

(11) **EP 2 352 342 A1**

(12) **EUROPEAN PATENT APPLICATION**
published in accordance with Art. 153(4) EPC

(43) Date of publication:
**03.08.2011 Bulletin 2011/31**

(21) Application number: **09823012.1**

(22) Date of filing: **17.07.2009**

(51) Int Cl.:
***H04W 52/24*** (2009.01)

(86) International application number:
**PCT/CN2009/072807**

(87) International publication number:
**WO 2010/048820 (06.05.2010 Gazette 2010/18)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.10.2008 CN 200810202020**

(71) Applicant: **Alcatel Lucent
75008 Paris (FR)**

(72) Inventor: **LIU, Hao
Shanghai 201206 (CN)**

(74) Representative: **Schäfer, Wolfgang
Dreiss Patentanwälte
Gerokstraße 1
D-70188 Stuttgart (DE)**

(54) **ENHANCED UPLINK POWER CONTROL BASED ON INTERFERENCE MANAGEMENT AND TRANSMISSION QUALITY CONTROL**

(57) The present invention provides an enhanced uplink power control mechanism based on interference management and transmission quality control: the uplink power is controlled on the basis of simultaneously considering both the interference of neighboring cells and the system performance of the cell, that is , the transmit power of the mobile station is controlled. The mobile station controls its transmit power according to interference over thermal of the neighboring cells or sectors of the cell or sector which the mobile station is located in, transmission loss compensation and quality of signal received from the mobile station by the base station which serves the mobile station. The uplink power is controlled on the basis of simultaneously considering both the interference of neighboring cells and the system performance of the cell via using the method and device of the present invention, and thus the system performance is improved effectively.

Fig. 2

**Description**

**FIELD OF THE INVENTION**

The present invention relates to mobile station and base station in wireless communication network, and more particularly relates to transmit power control in mobile station.

**BACKGROUND OF THE INVENTION**

Inter-cell interference (ICI) greatly impacts system performance in frequency reuse 1 (FR1) for WiMAX uplink. Therefore, it is important that proper power control should be employed by the system to control the amount of ICI. ICI is often measured by interference over thermal (IoT), which is defined as total received power from all the mobile stations (MS) in neighboring cells plus thermal noise power divided by thermal noise power. IoT value can reflect the magnitude of inter-cell interference.

Power control mechanism based on IoT control usually sets a target IoT value, and needs all the cells to exchange their measured IoT values. Each cell adjusts transmit power of all users within the cell according to reported IoT values from neighboring cells and fractional transmission loss compensation. However, the change of system performance, such as Hybrid Automatic Repeat reQuest (HARQ) acknowledgements, has not been considered in the process of power control.

In current IEEE802.16e specification, the target receive Signal-to-Noise Ratio (SNR) of each mobile station (MS) is determined by specific modulation and coding scheme (MCS). Outer loop (OL) controller can further adjust transmit power of each MS according to system performance variation, such as HARQ ACK/NACK messages. The disadvantage of the method is that only system performance variation of the cell is considered, but the interference from other neighboring cells is not considered.

IEEE802.16m specification is the further evolvement of IEEE802.16e specification and should have better system performance than IEEE802.16e. Therefore, a more advanced power control mechanism is needed to improve system performance.

**SUMMARY OF THE INVENTION**

For the purpose of solving above-mentioned disadvantages in background of the invention, the present invention proposes an enhanced uplink power control mechanism based on interference management and transmission quality control: the uplink power is controlled, that is, the transmit power of mobile station is controlled, on the basis of simultaneously considering both the interference of neighboring cells and the system performance of the cell.

According to the first aspect of the present invention, there is provided a method of controlling the transmit power, in a mobile station in wireless communication network, characterized in controlling the transmit power of the mobile station according to interference over thermal of the neighboring cells or sectors of the cell or sector which the mobile station is located in, transmission loss compensation and quality of the signal received from the mobile station by the base station which serves the mobile station.

Preferably, the method comprises following steps:

i. receiving a first indication message from the base station, the first indication message comprising a first adjustment amount of transmit power of the mobile station, wherein the first adjustment amount is determined by the base station according to magnitude relationship between the interference over thermal of the neighboring cells or sectors and predetermined target interference over thermal;
ii. determining transmission loss compensation amount;
iii. determining a second adjustment amount according to quality of the signal received from the mobile station by the base station;
iv. controlling the transmit power of the mobile station according to the first adjustment amount, the transmission loss compensation amount and the second adjustment amount.

According to the second aspect of the present invention, there is provided a method of indicating a mobile station to adjust its transmit power, in a base station of wireless communication network, comprising following steps:

- receiving measurement reports of interference over thermal sent by a plurality of neighboring base stations, each measurement report comprising interference over thermal of neighboring cell or sector corresponding to the base station;
- determining the average value of interference over thermal of a plurality of neighboring cells or sectors;

- comparing the average value of the interference over thermal with predetermined target interference over thermal, and obtaining a comparison result;
- determining a first adjustment amount of transmit power of the mobile station according to the comparison result;
- sending a first indication message comprising the first adjustment amount to the mobile station.

According to the third aspect of the present invention, there is provided a control device for controlling the transmit power, in a mobile station in wireless communication network, characterized in controlling the transmit power of the mobile station according to interference over thermal of the neighboring cells or sectors of the cell or sector which the mobile station is located in, transmission loss compensation and quality of the signal received from the mobile station by the base station which serves the mobile station.

Preferably, the control device comprises a first receiving means, a first determining means, a second determining means and a power control means; wherein, the first receiving means is used for receiving a first indication message from the base station, the first indication message comprising a first adjustment amount of transmit power of the mobile station, wherein the first adjustment amount is determined by the base station according to magnitude relationship between the interference over thermal of the neighboring cells or sectors and predetermined target interference over thermal; the first determining means is used for determining transmission loss compensation amount; the second determining means is used for determining a second adjustment amount according to quality of the signal received from the mobile station by the base station; the power control means is used for controlling the transmit power of the mobile station according to the first adjustment amount, the transmission loss compensation amount and the second adjustment amount.

According to the fourth aspect of the present invention, there is provided an indicating device for indicating a mobile station to adjust its transmit power, in a base station of wireless communication network, the indicating device comprises a second receiving means, a third determining means, a comparing means, a fourth determining means and a sending means; the second receiving means is used for receiving measurement reports of interference over thermal transmitted by a plurality of neighboring base stations, each measurement report comprising interference over thermal of neighboring cell or sector corresponding to the base station; the third determining means is used for determining the average value of interference over thermal of a plurality of neighboring cells or sectors; the comparing means is used for comparing the average value of the interference over thermal with predetermined target interference over thermal, and obtaining a comparison result; the fourth determining means is used for determining a first adjustment amount of transmit power of the mobile station according to the comparison result; the sending means is used for sending a first indication message comprising the first adjustment amount to the mobile station.

The uplink power is controlled on the basis of simultaneously considering both the interference of neighboring cells and the system performance of the cell via using the method and device of the present invention, and thus the system performance is improved effectively.

## BRIEF DESCRIPTION OF THE DRAWINGS

By reading the detailed description of the non-limiting embodiments with reference to the following drawings, other features, objects and advantages of the present invention will become apparent.

Fig. 1 is a simple schematic diagram of topological structure of network;
Fig. 2 is a flow diagram of a method of controlling the transmit power, in a mobile station in wireless communication network, according to an embodiment of the present invention;
Fig. 3 is a flow diagram of a method of indicating a mobile station served by a base station to adjust its transmit power, in the base station in wireless communication network, according to an embodiment of the present invention;
Fig. 4 is a structural block diagram of a control device for controlling the transmit power, in a mobile station in wireless communication network, according to an embodiment of the present invention;
Fig. 5 is a structural block diagram of an indicating device for indicating a mobile station served by a base station to adjust its transmit power, in the base station in wireless communication network, according to an embodiment of the present invention;

In drawings, same or similar reference signs refer to the same or similar device or method step.

## DETAILED DESCRIPTION OF EMBODIMENTS

In the followings, embodiments of the present invention are described in detail with reference to the drawings.

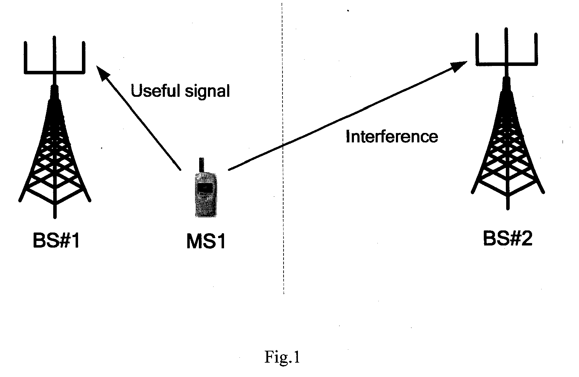

Fig. 1 shows a simple schematic diagram of topological structure of network. In Fig. 1, the mobile station MS1 is located in the cell C1 served by the base station BS#1, and the cell C2 is served by the base station BS#2. The frequency reuse factor is 1, that is, each cell uses same frequency resource. The signal sent by MS1 is useful signal for BS#1, but is interference for BS#2 or other neighboring base stations (not shown in Fig.1 for the reason of briefness). Those ordinary skilled in the art can understand that Fig.1 only shows two cells for the reason of briefness. In fact, there are a plurality of neighboring cells around C1; there are six neighboring cells around C1 for classical hexagonal cellular structure. MS1 controls its transmit power according to interference over thermal of the neighboring cells of the cell which MS 1 is located in, transmission loss compensation and quality of the uplink signal received from MS1 by BS#1.

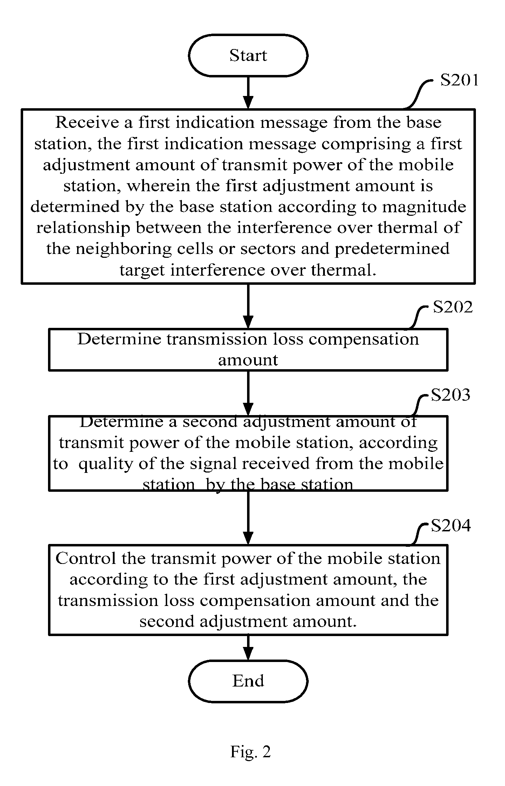

Fig. 2 shows a flow diagram of a method of controlling the transmit power, in a mobile station in wireless communication network, according to an embodiment of the present invention.

In the following, the control process of the transmit power of MS1 in Fig. 2 is described in detail with reference to Fig. 1.

Firstly, in step S201, MS1 receives a first indication message from BS#1, the first indication message comprising a first adjustment amount of transmit power of MS1, wherein the first adjustment amount is determined by BS#1 according to magnitude relationship between the interference over thermal of the neighboring cells or sectors and predetermined target interference over thermal.

Secondly, in step S202, MS1 determines transmission loss compensation amount.

Further, in step S203, MS1 determines a second adjustment amount of transmit power according to quality of the signal received from the mobile station by BS#1.

Finally, in step S204, MS1 controls its transmit power according to the first adjustment amount, the transmission loss compensation amount and the second adjustment amount.

In the following, the determining processes of the first adjustment amount, the transmission loss compensation amount and the second adjustment amount are respectively described via examples.

Firstly, the determining process of the first adjustment amount is described.

BS#1 determines the first adjustment amount of transmit power of MS1 according to magnitude relationship between the interference over thermal of the neighboring cells or sectors and predetermined target interference over thermal; BS#1 sends the first indication message comprising the first adjustment amount to MS1.

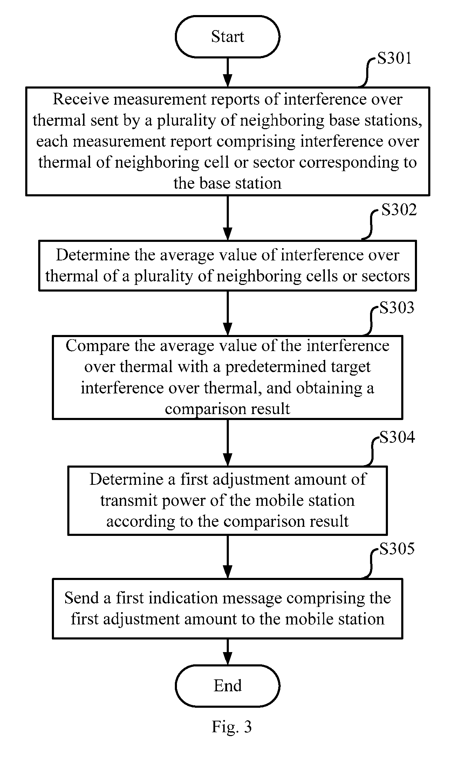

Fig. 3 shows a flow diagram of a method in BS#1 of indicating MS1 to adjust its transmit power, that is, a flow diagram of BS#1 of determining the first adjustment amount for MS1, according to an embodiment of the present invention, which is described in detail in the following.

Firstly, in step S301, BS#1 receives measurement reports of interference over thermal sent by a plurality of neighboring base stations, each measurement report comprising interference over thermal of neighboring cell or sector corresponding to the base station. Preferably, the interference over thermal which neighboring base station such as BS#2 in Fig. 1 sends to BS#1 is an average value of interference over thermal in a plurality of frequency domains and/or time domains.

Secondly, in step S302, BS#1 determines the average value of interference over thermal of a plurality of neighboring cells or sectors. For the scenario that the cell C1 which MS1 is located in is divided into sectors, BS#1 measures the interference over thermal of the sectors outside the sector which MS1 is located in, which is averaged together with the interference over thermal of sectors in neighboring cells(also called "neighboring sectors").

Further, in step S303, BS#1 compares the average value of the interference over thermal of neighboring cells or sectors with predetermined target interference over thermal, and obtains a comparison result. Target interference over thermal is a predetermined target value and is also a target which the system performance wants to achieve. The detailed value is determined according to the empirical value of actual system.

Then, in step S304, BS#1 determines a first adjustment amount of transmit power of MS1 according to the comparison result. To be specific, if the average value of the interference over thermal of neighboring cells is greater than the target interference over thermal, the first adjustment amount is determined as a negative value, that is, MS1 is indicated to reduce its transmit power. If the average value of the interference over thermal of neighboring cells is smaller than the target interference over thermal, the first adjustment amount is determined as a positive value, that is, MS1 is indicated to increase its transmit power. If the average value of the interference over thermal of neighboring cells is equal to the target interference over thermal, the first adjustment amount is determined as zero.

Finally, in step S305, BS#1 sends the first indication message comprising the first adjustment amount to MS1.

In the following the determining process of the first adjustment amount is described by example.

Taking Fig.1 as an example,

$$Rx\_power1 = Tx\_power - TL1 \qquad (1)$$

$$Rx\_power2 = Tx\_power - TL2 \qquad (2)$$

Let equation (1) minus (2), the result is:

$$\text{Rx\_power1} = \text{Rx\_power2} - \text{diff\_TL} \qquad (3)$$

Wherein, Tx_power is the transmit power of MS1; Rx_power1 is the power of signal received from MS1 by BS#1; Rx_power2 is the power of signal received from MS1 by BS#2; TL1 and TL2 are transmission losses of signals, sent by MS1, from MS1 to BS#1 and BS#2, which comprise pathloss, shadowing, transmitting antenna gains and receiving antenna gains; diff_TL= TL1 - TL2, diff_TL is the transmission loss difference between the signal transmission loss from MS1 to BS#1 and from MS1 to BS#2. For the sake of convenience, the units of variables in the description are all in dB.

If the interference caused by the MS1 to neighboring cell BS#n is the strongest, which corresponds to the maximum transmission loss difference between MS1 to BS#1 and MS1 to BS#n, that is, the transmission loss TL1 from MS1 to BS#1 and the transmission loss TLn from MS1 to BS#n are the closest.

On the basis of equation (3), considering the impact of noise and supposed that the transmission loss difference is the maximum, the transmission loss compensation factor $\alpha$ is introduced and the equation(4) is obtained:

$$\text{Target\_SINR} = \min \left( \text{Target\_INR} - \alpha \times \max(\text{diff\_TL}) \,,\, \text{max\_SINR} \right) \qquad (4)$$

Wherein, $0 \le \alpha \le 1$, $\alpha = 1$ represents complete transmission loss compensation; max_SINR represents the predetermined maximum target signal to interference plus noise ratio of the signal received from MS1 by BS#1; Target_SINR is the signal to interference plus noise ratio of the signal received from MS1 by BS#1, BS#1 desires to achieve the Target_SINR; Target_INR represents the target value of the strongest interference caused by MS 1 to neighboring base stations, which is called target interference-to-noise ratio.

Target interference-to-noise ratio (Target_INR) in equation (4) may be further adjusted based on interference over thermal information exchange among surrounding base stations. For example, BS#1 receives respective interference over thermal(Measured_IoT) reported by neighboring base stations, and compares the average value of a plurality of interference over thermal with predetermined target IoT value(Target_IoT), and adjusts the target interference-to-noise ratio of MS1 accordingly, which is listed by formula as follows:

$$
\begin{aligned}
&\text{If } \quad \text{mean}(\text{measured\_IoT}(j)) > \text{Target\_IoT} \quad (\text{wherein } j \neq 1) \\
&\qquad \text{Target\_INR} = \text{Target\_INR} - \text{Down\_INR} \\
&\text{else if mean} \left( \text{measured\_IoT}(j) \right) > \text{Target\_IoT} \\
&\qquad \text{Taget\_INR} = \text{Target\_INR} + \text{Up\_INR} \\
&\text{else} \\
&\qquad \text{Target\_INR} = \text{Target\_INR} \qquad\qquad\qquad\qquad\qquad\qquad (5)
\end{aligned}
$$

Wherein, measured_IoT (j) denotes interference over thermal measured by neighboring base stations of BS#1; Down_INR is down adjustment step for target interference-to-noise ratio, Up_INR is up adjustment step for target interference-to-noise ratio. Up_INR and Down_INR may be constant or variable, which is determined according to actual system requirement. Usually, during system initialization, Taget_INR value is set according to empirical value, and then, with the running of system, Target_INR is adjusted gradually according to interference over thermal of neighboring cells.

BS#1 sends the first indication message comprising the adjustment value of target interference-to-noise ratio of MS1, namely the above-mentioned first adjustment amount, to MS1. After having received the first indication message, MS1 updates its target signal to interference plus noise ratio Target_SINR according to equation (4), and adjusts its transmit power accordingly. To be specific, how MS1 adjusts its transmit power Tx_power according to target signal to interference plus noise ratio Target_SINR will be described in detail in the following.

Firstly, the determining of the transmission loss compensation amount is described in detail in the following.

According to the approximate symmetry feature of uplink and downlink signal in a large- scale area, MS 1 may use the transmission loss of downlink signal to approximate the transmission loss of uplink. For example, for MS1, the power of signal from BS#1 is the greatest within all of signals received from each base station(each base station transmits broadcast signal with almost the same power), and the power of signal from BS#n is the second greatest, then the maximum transmission loss may be approximated as:

$$\max (diff\_TL) = Rx\_powern\_MS1 - Rx\_power1\_MS1 \qquad (6)$$

The determining of the second adjustment amount is described in the following.

MS further adjusts the transmit power according to the quality of the signal received from MS1 by BS#1, that is , determines the second adjustment amount. BS#1 feeds the quality of the signal received from MS1 by it back to MS1. Preferably, BS#1 sends a second indication message to MS1, the second indication message being used for indicating whether the data packets received from MS1 by BS#1 are right or wrong.

For example, in data transmission based on HARQ, if the data packets received from MS1 by BS#1 are wrong, BS#1 will send a second indication message NACK indicating wrong receiving to MS1; if the data packets received from MS1 by BS#1 are right, BS#1 will send a second indication message ACK indicating right receiving to MS1. Sometimes, for example, when the uplink and downlink are symmetric, MS1 may further determine the second adjustment amount according to the quality of the signal received from BS#1 by MS1.

Taking the data transmission based on HARQ as an example, when MS1 receives the indication message NACK from BS#1, MS1 will adjust the transmit power an up adjustment step (Up_OL) higher. when MS1 receives the indication message ACK from BS#1, MS1 will adjust the transmit power a down adjustment step Down_OL() lower, shown in formula(7) as follows:

$$
\begin{aligned}
&\text{if } NACK \\
&\qquad Offset\_OL = Offset\_OL + Up\_OL \\
&\text{else if } ACK \\
&\qquad Offset\_OL = Offset\_OL - Down\_OL \\
&\text{else} \\
&\qquad Offset\_OL = Offset\_OL \qquad\qquad\qquad\qquad (7)
\end{aligned}
$$

Wherein, Offset_OL denotes the second adjustment amount, Up_OL denotes up adjustment step of the second adjustment amount, Down_OL denotes down adjustment step of the second adjustment amount. Up_OL and Down_OL may be constant or variable, which are determined according to actual system.

Finally, transmit power of MS1 can be determined by target signal to interference plus noise ratio Target_SINR, the second adjustment amount, transmission loss, noise power and interference over thermal of the cell or sector which MS1 is located in, as shown in equation(8):

$$Tx\_power = Target\_SINR + Offset\_OL + TL1 + Noise\_power + measured\_IoT\ (1) \qquad (8)$$

Wherein, TL1 is the transmission loss from MS1 to BS#1, and may either be estimated by MS1 according to downlink signal or be sent to MS1 after being measured by BS#1; Noise_power is the estimation value of noise power, and may either be the noise power estimated by MS1 itself or be the noise power which is estimated by BS#1 and sent to MS1; measured_IoT (1) is the interference over thermal of the cell or sector which MS1 is located in, which is usually measured by BS#1 and sent to MS1. Preferably, measured_IoT (1) is also the statistical average in time domain and/or frequency domain. Certainly, BS#1 may also send the physical quantities needed for measured_IoT (1) calculation to MS1, and then MS1 calculates interference over thermal measured_IoT (1). For example, BS#1 only sends interference and noise amount to MS 1, and MS 1 calculates interference over thermal measured_IoT (1).

Usually, during system initialization, firstly Offset_OL is set according to empirical value, and then, with the running of system, Offset_OL is adjusted gradually according to the quality of the signal received by BS#1.

From equation (8) it can be seen that the transmit power control of MS1 mainly comprises two parts: one is that MS1 determines target signal to interference plus noise ratio according to the first adjustment amount and the transmission loss compensation amount (called "external adjustment" for short in the following), the other is the second adjustment amount (called "internal adjustment" for short in the following) determined according to the quality of the signal received from MS1 by BS#1. Internal adjustment and external adjustment may have the same frequency or not. If internal adjustment and external adjustment have the same frequency, Offset_OL is the accumulated value of Up_OL and Down_OL. If internal adjustment frequency is greater than external adjustment frequency, when external adjustment is not executed, and only internal adjustment is executed, only adding Up_OL or reducing Down_OL on the basis of Tx_power is ok.

Usually, the transmit power of MS1 has predetermined maximum power value Max_power, and MS1 needs to judge whether transmit power Tx_power determined according to equation(8) is greater than predetermined maximum power value Max_power; if transmit power Tx_power is greater than predetermined maximum power value Max_power, then Tx_power = Max_power.

It should be noted that those ordinary skilled in the art can understand that determining modes of the above-mentioned first adjustment amount, the transmission loss compensation amount and the second adjustment amount are only exemplary. In practice, there are a plurality of detailed determining modes of the first adjustment amount, the transmission loss compensation amount and the second adjustment amount with respect to different system, which are not limited to above-mentioned embodiments. In addition, the physical meaning of the first adjustment amount and the second adjustment amount may be slightly different from the above-mentioned meaning.

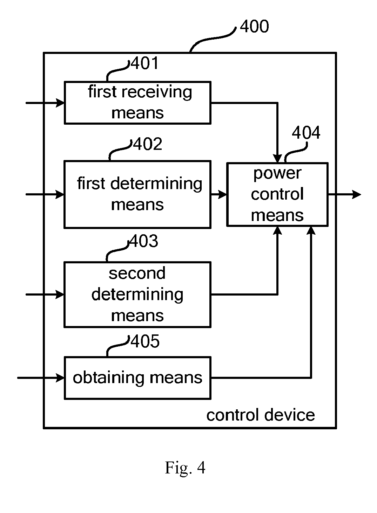

Fig.4 shows a structural block diagram of a control device 400 for controlling the transmit power of a mobile station, in the mobile station in wireless communication network, according to an embodiment of the present invention. The control device 400 comprises a first receiving means 401, a first determining means 402, a second determining means 403, a power control means 404 and an obtaining means 405.

In the following, with reference to the topological structure of network shown in Fig. 1, how the control device 400 in MS1 controls the transmit power of MS1 according to interference over thermal of neighboring cells of MS1, the transmission loss compensation and the quality of uplink signal received from MS1 by BS#1 is described in detail.

Those ordinary skilled in the art can understand that the control device 400 shown in Fig. 4 is only exemplary. The control device 400 of the present invention may have different structures according to different function implement and is not limited to that shown in Fig.4.

Firstly, the first receiving means 401 receives the first indication message from BS#1, the first indication message comprising a first adjustment amount of transmit power of MS1, wherein the first adjustment amount is determined by BS#1 according to magnitude relationship between the interference over thermal of the neighboring cells or sectors and predetermined target interference over thermal.

Secondly, the first determining means 402 determines transmission loss compensation amount.

Further, the second determining means 403 determines the second adjustment amount of transmit power of MS1 according to the quality of signal received from MS1 by BS#1.

Finally, the power control means 404 controls its transmit power according to the first adjustment amount, the transmission loss compensation amount and the second adjustment amount.

The determining processes of the first adjustment amount, the transmission loss compensation amount and the second adjustment amount are respectively described in the following via examples.

Firstly, the determining process of the first adjustment amount is described.

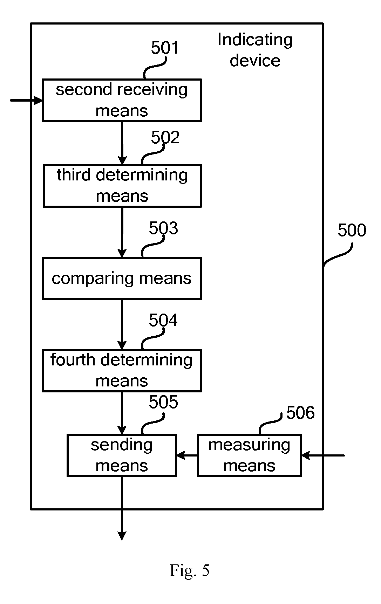

Fig. 5 shows a structural block diagram of an indicating device 500, for indicating MS1 served by BS#1 to adjust its transmit power, in BS#1 in wireless communication network, according to an embodiment of the present invention. The indicating device 500 comprises a second receiving means 501, a third determining means 502, a comparing means 503, a fourth determining means 504, a sending means 505 and a measuring means 506.

The indicating device 500 in BS#1 determines the first adjustment amount of transmit power of MS1 according to the magnitude relationship between the interference over thermal of the neighboring cells or sectors and the predetermined target interference over thermal; and the indicating device 500 in BS#1 sends the first indication message comprising the first adjustment amount to MS1. The process will be described in detail in the following. Fig. 3 shows a flow diagram of a method in BS#1 of indicating MS1 to adjust its transmit power, that is , determining, in BS#1, the first adjustment amount for MS1, according to an embodiment of the present invention, which is described in detail in the following.

Firstly, the second receiving means 501 receives measurement reports of interference over thermal sent by a plurality of neighboring base stations, each measurement report comprising interference over thermal of neighboring cell or sector corresponding to the base station. Preferably, interference over thermal which is sent to BS#1 by neighboring base stations such as BS#2 in Fig.1 is an average value of interference over thermal in a plurality of frequency domains and/or time domains.

Secondly, the third determining means 502 determines the average value of interference over thermal of a plurality of neighboring cells or sectors. For the scenario that the cell C1 which MS1 is located in is divided into sectors, BS#1 measures the interference over thermal of the sectors outside the sector which MS1 is located in, which is averaged with the interference over thermal of sectors in neighboring cells(also called "neighboring sectors") by the third determining means 502.

Further, the comparing means 503 compares the average value of the interference over thermal of neighboring cells or sectors with predetermined target interference over thermal, and obtains a comparison result. Target interference over thermal is a predetermined target value and is also a target which the system performance wants to achieve. The detailed value is determined according to the empirical value of actual system.

Then, the fourth determining means 504 determines the first adjustment amount of transmit power of MS1 according to the comparison result from the comparing means 503. To be specific, if the average value of the interference over thermal of neighboring cells is greater than the target interference over thermal, the first adjustment amount is determined as negative value, that is, MS1 is indicated to reduce its transmit power. If the average value of the interference over thermal of neighboring cells is smaller than the target interference over thermal, the first adjustment amount is determined as positive value, that is, MS1 is indicated to increase its transmit power. If the average value of the interference over thermal of neighboring cells is equal to the target interference over thermal, the first adjustment amount is determined as zero.

Finally, the sending means 505 sends a first indication message comprising the first adjustment amount to MS 1.

The determining process of the first adjustment amount can refer to embodiment in above-mentioned method description. That is referring to equation (4), target interference-to-noise ratio (Target_INR) in Fig. (4) may be further adjusted based on interference over thermal information exchange among surrounding base stations. For example, the second receiving means 501 receives respective interference over thermal (Measured_IoT) reported by neighboring base stations, and the comparing means 503 compares the average value of a plurality of interference over thermal determined by the third determining means 502 with target IoT value (Target_IoT), and the fourth determining means 504 determines the adjustment amount for adjusting the target interference-to-noise ratio of MS1, namely the first adjustment amount accordingly, which is shown in equation (5).

The sending means 505 sends the first indication message to MS1, the first indication message comprising the adjustment value of target interference-to-noise ratio of MS1, namely the above-mentioned first adjustment amount. After the first receiving means 401 in MS1 receives the first indication message, the power control means 404 updates target signal to interference plus noise ratio Target_SINR of MS 1 according to equation(4), and adjusts the transmit power accordingly. To be specific, how the power control means 404 adjusts its transmit power Tx_power according to target signal to interference plus noise ratio Target_SINR is described in detail in the following.

Firstly, the process that the first determining means 402 determines the transmission loss compensation amount is described in detail in the following.

According to the approximate symmetry feature of uplink and downlink signal in a large- scale area, the first determining means 402 may use the transmission loss of downlink signal to approximate the transmission loss of uplink. For example, for MS1, the power of signal from BS#1 is the greatest within all of signals received from each base station, and the power of signal from BS#n is the second greatest, then the first determining means 402 determines the difference of signal power between BS#1 and BS#n as the transmission loss compensation amount, as shown in equation (6).

The process that the second determining means 403 determines the second adjustment amount is described in the following.

The second determining means 403 further adjusts the transmit power according to the quality of signal received from MS1 by BS#1, that is , determines the second adjustment amount. BS#1 feeds the quality of signal received from MS1 by BS#1 back to MS1. Preferably, BS#1 sends a second indication message to MS1, the second indication message being used for indicating whether the data packets received from MS1 by BS#1 are right or wrong.

For example, in data transmission based on HARQ, if the data packets received from MS1 by BS#1 are wrong, BS#1 will send a second indication message NACK indicating wrong receiving to MS1; if the data packets received from MS1 by BS#1 are right, BS#1 will send a second indication message ACK indicating right receiving to MS1. Sometimes, for example, when the uplink and downlink are symmetric, the second determining means 403 may further determine the second adjustment amount according to the quality of signal received from BS#1 by itself.

Taking the data transmission based on HARQ as an example, when MS1 receives the indication message NACK from BS#1, the second determining means 403 will adjust the transmit power an up adjustment step (Up_OL) higher; when MS1 receives the indication message ACK from BS#1, the second determining means 403 will adjust the transmit power a down adjustment step (Down_OL) lower, as shown in above-mentioned formula(7).

Finally, the power control means 404 determines transmit power of MS1 according to the target signal to interference plus noise ratio Target_SINR, the second adjustment amount, transmission loss, noise power and interference over thermal of the cell or sector which MS1 is located in, as shown in equation(8). Wherein, measured_IoT (1) is the interference over thermal of the cell or sector which MS1 is located in, and is obtained by the obtaining means 405 from BS#1. Measured_IoT (1) is usually measured by the measuring means 506 in BS#1, and then is sent to MS1 by the sending means 505. Preferably, measured_IoT (1) is also the statistical average in time domain and/or frequency domain. Certainly, BS#1 may also send the physical quantities needed for measured_IoT (1) calculation to MS1, and then MS1 calculates the interference over thermal measured_IoT (1). For example, BS#1 only sends interference and noise amount to MS1, and MS1 calculates measured_IoT (1).

From equation (8) it can be seen that the transmit power control of MS1 mainly comprises two parts: one is that MS1 determines target signal to interference plus noise ratio according to the first adjustment amount and the transmission loss compensation amount, that is, above-mentioned "external adjustment"; the other is the second adjustment amount, that is, above-mentioned "internal adjustment", determined according to the quality of signal received from MS1 by BS#1. Internal adjustment and external adjustment may have the same frequency or not. If internal adjustment and external adjustment have the same frequency, Offset_OL is the accumulated value of Up_OL and Down_OL. If internal adjustment frequency is greater than external adjustment frequency, when external adjustment is not executed, and only internal adjustment is executed, only adding Up_OL or reducing Down_OL on the basis of Tx_power is ok.

Usually, the transmit power of MS1 has predetermined maximum power value Max_power, and the power control means 404 needs to judge whether transmit power Tx_power determined according to equation(8) is greater than the predetermined maximum power value Max_power; if Tx_power is greater than the predetermined maximum power value Max_power, Tx_power = Max_power.

It should be noted that those ordinary skilled in the art can understand that determining modes of the above-mentioned first adjustment amount, the transmission loss compensation amount and the second adjustment amount are only exemplary. In practice, there are a plurality of detailed determining modes of the first adjustment amount, the transmission loss compensation amount and the second adjustment amount according to system difference, which are not limited to above-mentioned embodiments. In addition, the physical meaning of the first adjustment amount and the second adjustment amount may be slightly different from the above-mentioned meaning.

The embodiments of the present invention are described above. It should be understood that the present invention is not limited to the above-mentioned particular embodiments, and those skilled in the art may make all kinds of variation or modification within the scope of the appended claims. The technical solution of the present invention may be implemented with software or hardware.

**Claims**

1. A method, of controlling the transmit power of a mobile station, in said mobile station in wireless communication network, **characterized in** controlling the transmit power of said mobile station according to interference over thermal of the neighboring cells or sectors of the cell or sector which said mobile station is located in, transmission loss compensation and quality of signal received from the mobile station by the base station which serves said mobile station.

2. The method according to claim 1, **characterized in that** the method comprises following steps:

    i. receiving a first indication message from said base station, the first indication message comprising a first adjustment amount of transmit power of said mobile station, wherein the first adjustment amount is determined by the base station according to magnitude relationship between the interference over thermal of the neighboring cells or sectors and predetermined target interference over thermal;
    ii. determining transmission loss compensation amount;
    iii. determining a second adjustment amount of transmit power of said mobile station according to the quality of signal received from said mobile station by said base station;
    iv. controlling the transmit power of said mobile station according to said first adjustment amount, said transmission loss compensation amount and said second adjustment amount.

3. The method according to claim 2, **characterized in that**, said step ii comprises following step:

    - determining said transmission loss compensation amount according to the maximum difference of differences between the transmission loss from said mobile station to said base station and the transmission loss from said mobile station to neighboring base stations.

4. The method according to claim 2, **characterized in that** said step iii comprises following step:

    - determining said second adjustment amount according to a second indication message from said base station, said second indication message being used for indicating whether the data packets received from said mobile station by said base station are right or wrong.

5. The method according to claim 2, **characterized in** further comprising following steps:

- obtaining, from said base station, interference over thermal of the cell or sector which said mobile station is located in;
said step iv comprises following step:
- determining the transmit power of said mobile station according to said first adjustment amount, said transmission loss compensation amount and said second adjustment amount, and based on following formula:

$$Tx\_power = Target\_SINR + Offset\_OL + TL + Noise\_power + measured\_IoT \; ;$$

wherein, Tx_power is transmit power of said mobile station, Offset_OL is said second adjustment amount, TL is transmission loss from said mobile station to said base station, Noise_power is the estimated value of noise power, measured_IoT is interference over thermal of the cell or sector which said mobile station is located in; Target_SINR is target signal to interference plus noise ratio determined according to following formula:

$$Target\_SINR = min\,(Target\_INR\text{-}\; \alpha \times max\,(diff\_TL),\, max\_SINR);$$

wherein, max (diff_TL) is the maximum difference of differences between the transmission loss from said mobile station to said base station and the transmission loss from said mobile station to neighboring base stations; $\alpha$ is a predetermined transmission loss compensation factor; Target_INR is target interference-to-noise ratio of said mobile station to neighboring cells or sectors, which is adjusted according to said first adjustment amount; max_SINR is a predetermined maximum signal to interference plus noise ratio.

6. The method according to claim 5, **characterized in** further comprising following steps:

- judging whether said Tx_power is greater than a predetermined maximum transmit power Max_power;
- if said Tx_power is greater than said Max_power, then Tx_power = Max_power.

7. The method according to claim 3, **characterized in that**, said transmission loss includes pathloss, shadowing, transmitting antenna gains and receiving antenna gains.

8. A method, of indicating a mobile station to adjust its transmit power, in a base station of wireless communication network, comprising following steps:

- receiving measurement reports of interference over thermal sent by a plurality of neighboring base stations, each measurement report comprising interference over thermal of neighboring cell or sector corresponding to the base station;
- determining the average value of interference over thermal of a plurality of neighboring cells or sectors;
- comparing the average value of said interference over thermal with predetermined target interference over thermal, and obtaining a comparison result;
- determining a first adjustment amount of transmit power of said mobile station according to said comparison result;
- sending a first indication message comprising said first adjustment amount to said mobile station.

9. The method according to claim 8, **characterized in** further comprising following steps:

- measuring the interference over thermal of the cell or sector which is served by the base station and said mobile station is located in;
- sending the measured interference over thermal to said mobile station.

10. The method according to claim 8, **characterized in that** said interference over thermal comprises statistical average in time and/or frequency domain.

11. A control device, for controlling the transmit power of a mobile station, in the mobile station in wireless communication network, **characterized in** controlling the transmit power of said mobile station according to interference over thermal of the neighboring cells or sectors of the cell or sector which said mobile station is located in, transmission loss compensation and the quality of signal received from the mobile station by the base station which serves said mobile station.

**12.** The control device according to claim 11, **characterized in** comprising:

a first receiving means, for receiving a first indication message from said base station, the first indication message comprising a first adjustment amount of transmit power of said mobile station, wherein the first adjustment amount is determined by the base station according to magnitude relationship between the interference over thermal of the neighboring cells or sectors and predetermined target interference over thermal;
a first determining means, for determining transmission loss compensation amount;
a second determining means, for determining a second adjustment amount of transmit power of said mobile station according to the quality of signal received from said mobile station by said base station;
a power control means, for controlling the transmit power of said mobile station according to said first adjustment amount, said transmission loss compensation amount and said second adjustment amount.

**13.** The control device according to claim 12, **characterized in that** said first determining means is further used for:

- determining said transmission loss compensation amount according to the maximum difference of differences between the transmission loss from said mobile station to said base station and the transmission loss from said mobile station to neighboring base stations.

**14.** The control device according to claim 12, **characterized in that** said second determining means is further used for:

- determining said second adjustment amount according to a second indication message from said base station, said second indication message being used for indicating whether the data packets received from said mobile station by said base station are right or wrong.

**15.** The control device according to claim 12, **characterized in** further comprising:

an obtaining means, for obtaining, from said base station, the interference over thermal of the cell or sector which said mobile station is located in;
said power control means is further used for:

- determining the transmit power of said mobile station according to said first adjustment amount, said transmission loss compensation amount and said second adjustment amount, and based on following formula:

$$\text{Tx\_power} = \text{Target\_SINR} + \text{Offset\_OL} + \text{TL} + \text{Noise\_power} + \text{measured\_IoT} \ ;$$

wherein, Tx_power is transmit power of said mobile station, Offset_OL is said second adjustment amount, TL is transmission loss from said mobile station to said base station, Noise_power is the estimated value of noise power, measured_IoT is interference over thermal of the cell or sector which said mobile station is located in; Target_SINR is target signal to interference plus noise ratio determined according to following formula:

$$\text{Target\_SINR} = \min (\text{Target\_INR-} \ \alpha \times \max (\text{diff\_TL}), \text{max\_SINR});$$

wherein, max (diff_TL) is the maximum difference of differences between the transmission loss from said mobile station to said base station and the transmission loss from said mobile station to neighboring base stations; $\alpha$ is a predetermined transmission loss compensation factor; Target_INR is the target interference-to-noise ratio of said mobile station to neighboring cells or sectors, which is adjusted according to said first adjustment amount; max_SINR is a predetermined maximum signal to interference plus noise ratio.

**16.** The control device according to claim 15, **characterized in** further comprising:

a judging means, for judging whether said Tx_power is greater than a predetermined maximum transmit power Max_power;
said power control means is further used for:

- if said Tx_power is greater than said Max_power, then Tx_power = Max_power.

**17.** The control device according to claim 13, **characterized in that** said transmission loss includes pathloss, shadowing, transmitting antenna gains and receiving antenna gains.

**18.** An indicating device, for indicating a mobile station to adjust its transmit power, in a base station of wireless communication network, comprising:

a second receiving means, for receiving measurement reports of interference over thermal transmitted by a plurality of neighboring base stations, each measurement report comprising interference over thermal of neighboring cell or sector corresponding to the base station;
a third determining means, for determining the average value of interference over thermal of a plurality of neighboring cells or sectors;
a comparing means, for comparing the average value of said interference over thermal with predetermined target interference over thermal, and obtaining a comparison result;
a fourth determining means, for determining a first adjustment amount of transmit power of said mobile station according to said comparison result;
a sending means, for sending a first indication message comprising said first adjustment amount to said mobile station.

**19.** The indicating device according to claim 18, **characterized in** further comprising:

a measuring means, for measuring the interference over thermal of the cell or sector which is served by the base station and said mobile station is located in;
said sending means is further used for sending the measured interference over thermal to said mobile station.

**20.** The indicating device according to claim 18, **characterized in that** said interference over thermal comprises statistical average in time and/or frequency domain.

Fig.1

Start

S201

Receive a first indication message from the base station, the first indication message comprising a first adjustment amount of transmit power of the mobile station, wherein the first adjustment amount is determined by the base station according to magnitude relationship between the interference over thermal of the neighboring cells or sectors and predetermined target interference over thermal.

S202

Determine transmission loss compensation amount

S203

Determine a second adjustment amount of transmit power of the mobile station, according to quality of the signal received from the mobile station by the base station

S204

Control the transmit power of the mobile station according to the first adjustment amount, the transmission loss compensation amount and the second adjustment amount.

End

Fig. 2

Fig. 3

Fig. 4

Fig. 5

# INTERNATIONAL SEARCH REPORT

International application No.

PCT/CN2009/072807

## A. CLASSIFICATION OF SUBJECT MATTER

H04W 52/24 (2009.01) i

According to International Patent Classification (IPC) or to both national classification and IPC

## B. FIELDS SEARCHED

Minimum documentation searched (classification system followed by classification symbols)

IPC: H04B  H04L  H04W 52/

Documentation searched other than minimum documentation to the extent that such documents are included in the fields searched

Electronic data base consulted during the international search (name of data base and, where practicable, search terms used)

WPI,EPODOC,PAJ,CNKI,CNPAT: power?, control, controllers, controlling, transmission power?, controls power?, transmit power?, transmitter power?, interference over thermal, cell?, sector?, interference power, OSI, other sector interference, quality, loss, losses, attenuation?

## C. DOCUMENTS CONSIDERED TO BE RELEVANT

| Category* | Citation of document, with indication, where appropriate, of the relevant passages | Relevant to claim No. |
|---|---|---|
| Y | US 2008 / 0205361 A1 (KUNITACHI, K.T. et al.) 28 Aug. 2008 (28.08.2008) The description paragraphs. [0009]-[0014], [0065]-[0071], [0073]-[0076], [0087], [0099]-[0104],  claims 1-8, & Figs.3,8 | 1,11 |
| A | The whole document | 2-10,12-20 |
| Y | CN 1998247 A  (WALTICAL SOLUTIONS INC.)  11 Jul. 2007 (11.07.2007) Claims 1-9 | 1,11 |

☒ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 Oct. 2009 (14.10.2009) | **29 Oct. 2009 (29.10.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WU,Xinghua** Telephone No. (86-10)62411371 |
|---|---|

Form PCT/ISA /210 (second sheet) (July 2009)

# INTERNATIONAL SEARCH REPORT

International application No.

PCT/CN2009/072807

C (Continuation).     DOCUMENTS CONSIDERED TO BE RELEVANT

| Category* | Citation of document, with indication, where appropriate, of the relevant passages | Relevant to claim No. |
|---|---|---|
| Y | US 2008 / 0153535 A1 (QUAL COMM INCORPORATED)<br><br>26 June 2008 (26.06.2008), claims 1-6,34-42 | 1,11 |
| Y | CN 101207415 A (BEIJING SANXING COMMUNICATION TECHNOLOGY ET AL.)<br><br>25 June 2008 (25.06.2008)      the description, page 11, lines 27-30 | 1,11 |
| A | WO 2007 / 138651 A1   (MATSUSHITA ELECTRIC IND CO., LTD.)<br><br>06 Dec. 2007 (06.12.2007)       the whole document | 1-20 |
| A | US 2004 / 0141482 A1 (INTERDIGITAL TECHNOLOGY CORPORATION)<br><br>22 July 2004   (22.07.2004)       the whole document | 1-20 |
| A | US 2007 / 0082620 A1 (INTERDIGITAL TECHNOLOGY CORPORATION)<br><br>12 Apr. 2007 (12.04.2007)     the whole document | 1-20 |

Form PCT/ISA /210 (continuation of second sheet ) (July 2009)

## INTERNATIONAL SEARCH REPORT
### Information on patent family members

| International application No. |
| --- |
| PCT/CN2009/072807 |

| Patent Documents referred in the Report | Publication Date | Patent Family | Publication Date |
| --- | --- | --- | --- |
| US 2008 / 0205361 A1 | 28.08.2008 | JP 2008211411 A | 11.09.2008 |
| CN 1998247 A | 11.07.2007 | WO 2006004968 A2 | 12.01.2006 |
| | | US 2008039129 A1 | 14.02.2008 |
| US 2008 / 0153535 A1 | 26.06.2008 | WO 2008067471 A1 | 05.06.2008 |
| | | TW 200838185 A | 16.09.2008 |
| | | CA 2670782 A | 05.06.2008 |
| | | AU 2007325113 A | 05.06.2008 |
| | | EP 2087612 A | 12.08.009 |
| CN 101207415 A | 25.06.2008 | None | |
| WO 2007 / 138651 A1 | 06.12.2007 | None | |
| US 2004 / 0141482 A1 | 22.07.2004 | WO 2004047331 A1 | 03.06.2004 |
| | | AU 2003291072 A1 | 15.06.2004 |
| | | EP 1565997 A1 | 24.08.2005 |
| | | TW 200419971 A | 01.10.2004 |
| | | TW 243549 B1 | 11.11.2005 |
| | | US 7492735 B2 | 17.02.2009 |
| | | TW 200737779 A | 01.10.2007 |
| US 2007 / 0082620 A1 | 12.04.2007 | WO 2007044316 A1 | 19.04.2007 |

Form PCT/ISA /210 (patent family annex) (July 2009)